# EUROPEAN PATENT APPLICATION

(11) **EP 4 583 485 A1**
(43) Date of publication of application: **09.07.2025**
(21) Application number: 23869871.6
(22) Date of filing: 30.06.2023
(51) Int. Cl.: H04L 47/50

(54) **METHOD FOR DETERMINING SCHEDULING POLICY, AND RELATED APPARATUS**

(30) Priority: 30.09.2022 CN 202211215235
(71) Applicant: Huawei Technologies Co., Ltd., Shenzhen, Guangdong 518129 (CN)
(72) Inventor: XIA, Bin, Shenzhen, Guangdong 518129 (CN); XU, Huiying, Shenzhen, Guangdong 518129 (CN); ZHANG, Xubao, Shenzhen, Guangdong 518129 (CN); DU, Zhengxian, Shenzhen, Guangdong 518129 (CN); LV, Wenxiang, Shenzhen, Guangdong 518129 (CN); LI, Yuechen, Shenzhen, Guangdong 518129 (CN)
(74) Representative: Gill Jennings & Every LLP
(86) International application number: PCT/CN2023/105128
(87) International publication number: WO 2024/066623

(57) **Abstract**

A scheduling policy determining method and a related apparatus are disclosed. The method includes: determining, in response to that a first link is congested, a first scheduling policy for traffic of at least one application on the first link according to scheduling policies separately supported by a plurality of applications to which traffic carried on the first link belongs; and applying the first scheduling policy. When the first link is congested, a scheduling policy is determined according to the scheduling policies supported by the plurality of applications on the link, so that a control device or a network device can schedule the traffic of the applications in a coordinated manner according to the scheduling policies separately supported by the applications. **In** this way, network resources can be fully used to transmit the traffic of the applications, so that quality of service of each application can be ensured to the greatest extent, and a problem that quality of a low-priority service is definitely impaired because rate limiting is directly performed on a low-priority application in the conventional technology is avoided.

## Description

This application claims priority to Chinese Patent Application No. 202211215235.3, filed on September 30, 2022 and entitled "SCHEDULING POLICY DETERMINING METHOD AND RELATED APPARATUS", which is incorporated herein by reference in its entirety.

### TECHNICAL FIELD

This application relates to the field of network technologies, and in particular, to a scheduling policy determining method and a related apparatus.

### BACKGROUND

A link is a path established between two nodes to transmit traffic of one or more applications, for example, a link established between a node A and a node B to transmit traffic of an office application.

When a link carries traffic of a plurality of applications at the same time and the link is congested, a rate of traffic of a low-priority application is directly limited to ensure a bandwidth of a key application. Consequently, quality of service of the low-priority application is definitely affected.

### SUMMARY

This application provides a scheduling policy determining method and a related apparatus, to avoid a problem that quality of a low-priority service is definitely impaired because rate limiting is directly performed on a low-priority application in the convenient technology.

According to a first aspect, a scheduling policy determining method is provided. The method may be performed by a control device or a network device in a network. The method includes: determining, in response to that a first link is congested, a first scheduling policy for traffic of at least one application on the first link according to scheduling policies separately supported by a plurality of applications to which traffic carried on the first link belongs; and applying the first scheduling policy.

When the first link is congested, a scheduling policy is determined according to the scheduling policies supported by the plurality of applications on the link, so that a control device or a network device can schedule the traffic of the applications in a coordinated manner according to the scheduling policies separately supported by the applications. In this way, network resources can be fully used to transmit the traffic of the applications, so that quality of service of each application can be ensured to the greatest extent, and a problem that quality of a low-priority service is definitely impaired because rate limiting is directly performed on a low-priority application in the conventional technology is avoided.

In an implementation of this application, the scheduling policy includes a lossless scheduling policy and a lossy scheduling policy. The lossy scheduling policy is a scheduling policy that causes a loss of a data packet of an application. The lossless scheduling policy is a scheduling policy that does not cause a loss of a data packet of an application.

The lossless scheduling policy includes at least one of the following: a path adjustment policy or a compression policy. The lossy scheduling policy includes a rate limiting policy. In addition, the scheduling policy further includes a pipe mapping adjustment policy. The pipe mapping adjustment policy may be a lossless scheduling policy or a lossy scheduling policy.

In an implementation of this application, the determining a first scheduling policy for traffic of at least one application on the first link according to scheduling policies separately supported by a plurality of applications to which traffic carried on the first link belongs includes: determining, in response to that an application supporting the lossless scheduling policy exists, the first scheduling policy according to a scheduling policy supported by the application supporting the lossless scheduling policy; or determining, in response to that no application supporting the lossless scheduling policy exists, the first scheduling policy according to a scheduling policy supported by an application supporting the lossy scheduling policy.

In this implementation, the lossless scheduling policy is preferentially determined when the scheduling policy is determined, to ensure quality of service of all applications on the link as much as possible.

For example, the determining the first scheduling policy according to a scheduling policy supported by the application supporting the lossless scheduling policy includes:
determining, in response to that one application supports the lossless scheduling policy, that the first scheduling policy is the scheduling policy supported by the application supporting the lossless scheduling policy; or determining, in response to that a plurality of applications support the lossless scheduling policy, that the first scheduling policy includes a scheduling policy supported by at least one of the applications supporting the lossless scheduling policy.

The determining that the first scheduling policy includes a scheduling policy supported by at least one of the applications supporting the lossless scheduling policy includes: combining the application supporting the lossless scheduling policy and the scheduling policy supported by the application, to obtain at least one policy combination, where each policy combination corresponds to a scheduling policy for at least one application; determining whether congestion on the first link can be resolved when scheduling is performed according to the scheduling policy corresponding to each of the at least one policy combination; and selecting, in response to that a policy combination that can resolve the congestion on the first link exists, a policy combination from the policy combination that can resolve the congestion on the first link, and using a scheduling policy corresponding to the selected policy combination as the first scheduling policy.

The combination of the application and the scheduling policy is actually combination performed by using the scheduling policy as precision. For example, an application A supports a scheduling policy a and a scheduling policy b. During combination, the application A has two manners of joining the combination: application A-scheduling policy a and application A-scheduling policy b.

If there is no combination (that is, a policy combination) that can resolve the congestion on the first link, combination and selection continue until all combination manners are exhaustively listed. When there is still no combination that can resolve the congestion, the first scheduling policy is determined according to a scheduling policy supported by the application supporting the lossy scheduling policy.

In this implementation, the application and the scheduling policy are combined, and a combination that can resolve the congestion on the first link is selected from these combinations, to ensure an effect of executing the scheduling policy.

In a possible implementation, when it is determined whether the congestion on the first link can be resolved when scheduling is performed according to the scheduling policy corresponding to the combination, whether the congestion problem on the first link can be resolved after scheduling is determined based on current traffic data and according to the selected scheduling policy.

In another possible implementation, when it is determined whether the congestion on the first link can be resolved when scheduling is performed according to the scheduling policy corresponding to the combination, whether the congestion problem on the first link can be resolved after scheduling is determined based on predicted traffic data and according to the selected scheduling policy.

For example, whether a scheduling policy corresponding to a first combination can resolve the congestion on the first link is determined based on the predicted traffic data and according to the scheduling policy corresponding to the first policy combination, where the first policy combination is any one of the at least one policy combination.

In this implementation, the scheduling policy is determined based on the predicted traffic data, so that the scheduling policy executed by the network device can better match future traffic carried on the link, congestion that may occur on the link in the future can be further alleviated, scheduling is performed less frequently, and network resources are saved.

For example, that whether a scheduling policy corresponding to a first policy combination can resolve the congestion on the first link is determined based on the predicted traffic data and according to the scheduling policy corresponding to the first policy combination includes: predicting traffic data of each application based on traffic profiles of the plurality of applications; determining, according to the scheduling policy corresponding to the first policy combination and based on the predicted traffic data of each application, a value of traffic expected to be carried on the first link; and determining, based on the value of traffic expected to be carried on the first link, whether the first link is congested.

In this implementation, traffic data is predicted based on a traffic profile of each application, so that prediction precision can be improved, and accuracy of determining whether the congestion on the first link can be resolved can be improved.

In an implementation of this application, the selecting a policy combination from the policy combination that can resolve the congestion on the first link includes: selecting, based on at least one of a priority of an application and an application requirement, the policy combination from the policy combination that can resolve the congestion on the first link.

In a possible implementation, a scheduling policy corresponding to a policy combination with a lower priority is selected based on the priority of each application.

In another possible implementation, a scheduling policy corresponding to a policy combination that can meet the application requirement in the combination is selected based on the application requirement of each application.

In still another possible implementation, a scheduling policy corresponding to a policy combination with a lower priority in the combination that can meet the application requirement in the combination is selected based on the priority of each application and the application requirement of each application.

Optionally, the method further includes: determining a link related to the first scheduling policy; determining, based on traffic data of the link related to the first scheduling policy, whether the link related to the first scheduling policy is congested after the first scheduling policy is executed; and generating, in response to that the link related to the first scheduling policy is not congested, a first scheduling policy instruction according to the first scheduling policy.

In this implementation, whether another related link after the first scheduling policy is executed is congested is considered, to avoid resolving a problem that the another link is congested when the first link is congested, and ensure quality of service during network transmission.

Optionally, the method further includes: determining, in response to that a second link is congested, a second scheduling policy for traffic of at least one application on the second link according to scheduling policies separately supported by a plurality of applications to which traffic carried on the second link belongs; determining links related to the first scheduling policy and the second scheduling policy; determining, based on traffic data of the related links, whether the links related to the first scheduling policy and the second scheduling policy are congested after the first scheduling policy and the second scheduling policy are executed; and in response to that the related links are not congested, generating a first scheduling policy instruction according to the first scheduling policy and generating a second scheduling policy instruction according to the second scheduling policy.

In this implementation, when scheduling is performed on congestion of a plurality of links, a scheduling policy for congestion of each link does not cause congestion of another link. In this solution, the entire network is used as a scheduling object, so that an additional network problem caused by focusing only on a single device or link in the conventional technology is avoided.

Optionally, the method further includes: determining, before the first scheduling policy is applied, an expected benefit obtained by performing traffic scheduling according to the first scheduling policy; determining an actual benefit after the first scheduling policy is applied; and determining, in response to that a third link is congested, a third scheduling policy based on the expected benefit and the actual benefit.

In this implementation, based on a deviation between the expected benefit and the actual benefit, guidance may be provided for determining a subsequent scheduling policy, so that an effect after scheduling is better.

In a possible implementation, the method further includes: generating a traffic profile of each application based on traffic data of the plurality of applications; and adjusting a mapping relationship between each application and a pipe based on the traffic profile of each application, where the pipe includes at least one of a tunnel and a queue.

For example, the adjusting a mapping relationship between each application and a pipe based on the traffic profile of each application includes: mapping, based on a traffic mode of each application, applications in a same traffic mode to a same pipe, and mapping applications in different traffic modes to different pipes.

In this implementation, traffic of the applications in the same traffic mode is mapped to the same pipe, so that traffic characteristics of different pipes are more easily distinguished, and management, control, and scheduling of each pipe are facilitated.

In a possible implementation, the method further includes: obtaining a traffic profile of each group in each grouping manner that is obtained by grouping the plurality of applications in a plurality of grouping manners, where each group includes at least one application; and adjusting a mapping relationship between the plurality of applications and a pipe based on the traffic profile of each group, where the pipe includes at least one of a tunnel and a queue.

For example, the adjusting a mapping relationship between the plurality of applications and a pipe involved in traffic statistics data based on the traffic profile of each group includes: selecting, based on a stability degree of the traffic profile of each group in each grouping manner, a grouping manner whose stability degree meets a stability degree condition; and mapping applications in a same group under the selected grouping manner to a same pipe and applications in different groups under the selected grouping manner to different pipes.

The stability degree refers to a degree of stability, and may be evaluated based on a parameter like a traffic mode and a peak-to-average ratio of traffic. In the selection process, a traffic mode may be selected as a small-value oscillation or a stable double-peak type, and then a peak-to-average ratio meeting a requirement in these traffic modes is selected.

In this implementation, different profile types are combined together to complement each other, for example, a double-peak type and a glitch type are combined together, so that a combined traffic profile of a pipe is more stable. This combination makes the traffic of the obtained pipe stable, and can reduce a number of times of link bandwidth adjustment.

According to a second aspect, a scheduling policy determining apparatus is provided. The apparatus includes:
a determining unit, configured to determine, in response to that a first link is congested, a first scheduling policy for traffic of at least one application on the first link according to scheduling policies separately supported by a plurality of applications to which traffic carried on the first link belongs; and
an application unit, configured to apply the first scheduling policy.

Optionally, the determining unit is configured to determine, in response to that an application supporting a lossless scheduling policy exists, the first scheduling policy according to a scheduling policy supported by the application supporting the lossless scheduling policy.

Optionally, the determining unit is configured to: determine, in response to that one application supports the lossless scheduling policy, that the scheduling policy supported by the application supporting the lossless scheduling policy is the first scheduling policy; or determine, in response to that at least two applications support the lossless scheduling policy, that a scheduling policy supported by at least one of the applications supporting the lossless scheduling policy is the first scheduling policy.

Optionally, the determining unit is configured to: combine the application supporting the lossless scheduling policy and the scheduling policy supported by the application, to obtain at least one policy combination, where each policy combination corresponds to a scheduling policy for at least one application; determine whether congestion on the first link can be resolved when scheduling is performed according to the scheduling policy corresponding to each of the at least one policy combination; and select, in response to that a policy combination that can resolve the congestion on the first link exists, a policy combination from the policy combination that can resolve the congestion on the first link, and use a scheduling policy corresponding to the selected policy combination as the first scheduling policy.

Optionally, the determining unit is configured to determine, based on the predicted traffic data and according to a scheduling policy corresponding to a first policy combination, whether the scheduling policy corresponding to the first policy combination can resolve the congestion on the first link, where the first policy combination is any one of the at least one policy combination.

Optionally, the determining unit is configured to: predict traffic data of each application based on traffic profiles of the plurality of applications; determine, according to the scheduling policy corresponding to the first policy combination and based on the predicted traffic data of each application, a value of traffic expected to be carried on the first link; and determine, based on the value of traffic expected to be carried on the first link, whether the first link is congested.

Optionally, the determining unit is configured to: select, based on at least one of a priority of an application and an application requirement, the policy combination from the policy combination that can resolve the congestion on the first link.

Optionally, the determining unit is configured to determine, in response to that no application supporting the lossless scheduling policy exists, the first scheduling policy according to a scheduling policy supported by an application supporting the lossy scheduling policy.

Optionally, the determining unit is further configured to: determine a link related to the first scheduling policy; and determine, based on traffic data of the link related to the first scheduling policy, whether the link related to the first scheduling policy is congested after the first scheduling policy is executed.

The apparatus further includes a generation unit, configured to: generate, in response to that the link related to the first scheduling policy is not congested, a first scheduling policy instruction according to the first scheduling policy.

Optionally, the determining unit is further configured to: determine, in response to that a second link is congested, a second scheduling policy for traffic of at least one application on the second link according to scheduling policies separately supported by a plurality of applications to which traffic carried on the second link belongs; determine links related to the first scheduling policy and the second scheduling policy; and determine, based on traffic data of the related links, whether the links related to the first scheduling policy and the second scheduling policy are congested after the first scheduling policy and the second scheduling policy are executed.

The generation unit is configured to: in response to that the related links are not congested, generate a first scheduling policy instruction according to the first scheduling policy and generate a second scheduling policy instruction according to the second scheduling policy.

Optionally, the determining unit is further configured to: determine, before the first scheduling policy is applied, an expected benefit obtained by performing traffic scheduling according to the first scheduling policy; determine an actual benefit after the first scheduling policy is applied; and determine, in response to that a third link is congested, a third scheduling policy based on the expected benefit and the actual benefit.

Optionally, the generation unit is configured to generate a traffic profile of each application based on traffic data of the plurality of applications.

The apparatus further includes an adjustment unit, configured to adjust a mapping relationship between each application and a pipe based on the traffic profile of each application, where the pipe includes at least one of a tunnel and a queue.

Optionally, the generation unit is configured to obtain a traffic profile of each group in each grouping manner that is obtained by grouping the plurality of applications in a plurality of grouping manners, where each group includes at least one application.

The adjustment unit is configured to adjust a mapping relationship between the plurality of applications and a pipe based on the traffic profile of each group, where the pipe includes at least one of a tunnel and a queue.

According to a third aspect, an electronic device is provided. The electronic device is a control device or a network device. The electronic device includes a processor and a memory. The memory is configured to store a software program and a module. The processor runs or executes the software program and/or the module stored in the memory, to implement the method according to any one of the first aspect or the possible implementations of the first aspect.

Optionally, there may be one or more processors, and there may be one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a fourth aspect, a computer program product is provided. The computer program product includes computer program code, and when the computer program code is run by a computer, the computer is enabled to perform the method according to any one of the first aspect or the possible implementations of the first aspect.

According to a fifth aspect, this application provides a computer-readable storage medium, where the computer-readable storage medium is configured to store program code executed by a processor, and the program code is used to implement the method according to any possible implementation of the first aspect.

According to a sixth aspect, a chip is provided, including a processor, where the processor is configured to invoke, from a memory, and run instructions stored in the memory, so that a communication device in which the chip is installed is enabled to perform the method according to any one of the possible implementations of the first aspect.

According to a seventh aspect, another chip is provided. The another chip includes an input interface, an output interface, a processor, and a memory. The input interface, the output interface, the processor, and the memory are connected through an internal connection path. The processor is configured to execute code in the memory, and when the code is executed, the processor is configured to perform the method according to any one of the possible implementations of the first aspect.

### BRIEF DESCRIPTION OF DRAWINGS

FIG. 1 is a diagram of an application scenario according to an embodiment of this application;
FIG. 2 is a diagram of an application scenario according to an embodiment of this application;
FIG. 3 is a flowchart of a scheduling policy determining method according to an embodiment of this application;
FIG. 4 is a flowchart of a scheduling policy determining method according to an embodiment of this application;
FIG. 5 is a diagram of WFQ weight adjustment according to an embodiment of this application;
FIG. 6 is a flowchart of a scheduling policy determining method according to an embodiment of this application;
FIG. 7 is a flowchart of a scheduling policy determining method according to an embodiment of this application;
FIG. 8 is a flowchart of a scheduling policy determining method according to an embodiment of this application;
FIG. 9 is a flowchart of a scheduling policy determining method according to an embodiment of this application;
FIG. 10 is a flowchart of a scheduling policy determining method according to an embodiment of this application;
FIG. 11 is a flowchart of a scheduling policy determining method according to an embodiment of this application;
FIG. 12 is a diagram of a network topology according to an embodiment of this application;
FIG. 13 is a diagram of a scheduling process according to an embodiment of this application;
FIG. 14 is a diagram of modules according to an embodiment of this application;
FIG. 15 is a block diagram of a scheduling policy determining apparatus according to an embodiment of this application; and
FIG. 16 is a diagram of a structure of a control device or a network device according to an embodiment of this application.

### DESCRIPTION OF EMBODIMENTS

To make the objectives, technical solutions, and advantages of this application clearer, the following further describes the implementations of this application in detail with reference to the accompanying drawings.

To facilitate understanding of the technical solutions provided in embodiments of this application, an application scenario of this application is first described. The application scenario may be a communication network like a distributed storage system or a data center. The following describes the application scenario of this application by using the distributed storage system as an example.

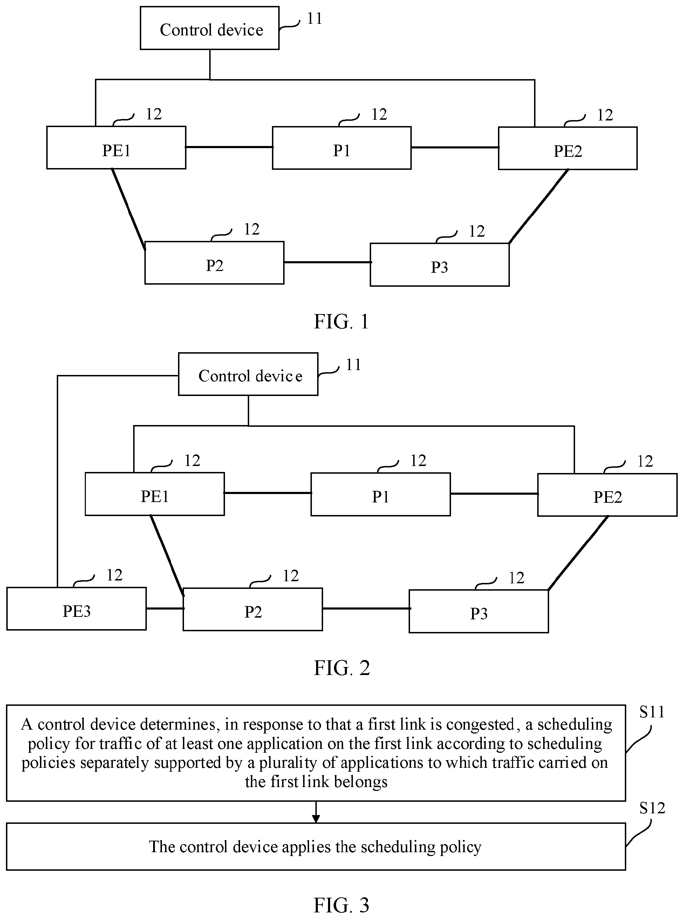

FIG. 1 is a diagram of a structure of an application scenario according to an embodiment of this application. As shown in FIG. 1, the application scenario includes a control device 11 and a network device 12. The control device 11 may be a management node in a network, for example, a network management device (for example, a software defined network (software defined network, SDN) controller). The network device 12 may be a network node in the network, for example, a routing device. As shown in FIG. 1, the network device 12 includes a provider (provider) device, namely, a P device in the figure, and the network device 12 further includes a provider edge (provider edge) device, namely, a PE device in the figure.

As shown in FIG. 1, the control device 11 is connected to the PE device. The control device 11 may be connected to each P device through the PE device, or the control device 11 may be directly connected to each P device (not directly shown in the figure to avoid over-complication of lines).

A link is established between any two network devices 12 in FIG. 1 to transmit service data. A tunnel (tunnel) is configured between two PE devices. The tunnel is used for transmission of a specific application, and may transmit traffic of at least one application.

For example, for a tunnel from a PE1 to a PE2, the PE1 is an ingress device of the tunnel, and the PE2 is an egress device of the tunnel. The tunnel may be carried on a path, for example, PE1-P1-PE2. The tunnel may alternatively be carried on a plurality of paths, for example, two paths: PE1-P1-PE2 and PE1-P2-P3-PE2. The two paths transmit traffic on the tunnel in a specific ratio.

FIG. 2 is a diagram of a structure of another application scenario according to an embodiment of this application. As shown in FIG. 2, a difference between the application scenario in FIG. 2 and the application scenario in FIG. 1 lies in that the network device 12 further includes a PE3, a tunnel may also be configured between the PE3 and the PE2, and the tunnel is carried on a path PE3-P2-P3-PE2. In FIG. 1, a P2 receives only traffic from the PE1. In FIG. 2, a P2 aggregates traffic from the PE1 and the PE3.

A link P2-P3 carries traffic of two tunnels. Therefore, traffic scheduling on the link P2-P3 needs to consider traffic of both tunnels.

In addition to the control device and the network device, the application scenario may further include user equipment. The user equipment may be an independent device and is connected to the control device, or the user equipment may be integrated into the control device.

FIG. 3 is a flowchart of a scheduling policy determining method according to an embodiment of this application. The method may be applied to a control device, or may be applied to a network device. The following uses an example in which the method is applied to the control device for description. As shown in FIG. 3, the method includes the following steps.

S11: The control device determines, in response to that a first link is congested, a scheduling policy for traffic of at least one application on the first link according to scheduling policies separately supported by a plurality of applications to which traffic carried on the first link belongs.

The congestion on the link means that traffic carried on the link exceeds a congestion threshold.

For example, the congestion threshold is 80%. For a link whose bandwidth is 100 Mbps, when traffic exceeds 80 Mbps, it is determined that the link is congested.

The scheduling policy supported by the application is usually a scheduling policy that has no impact or has little impact on a service instruction of the application.

S12: The control device applies the scheduling policy.

For example, the control device configures a scheduling policy instruction in an ingress device that carries the traffic of the at least one application.

For example, the control device configures a scheduling policy instruction of each application in an ingress device that carries traffic of the application.

The ingress device is, for example, an ingress device of a tunnel carrying traffic of each application function in the at least one application.

In embodiments of this application, when the first link is congested, a scheduling policy is determined according to the scheduling policies supported by the plurality of applications on the link, so that a control device can schedule the traffic of the applications in a coordinated manner according to the scheduling policies separately supported by the applications. In this way, network resources can be fully used to transmit the traffic of the applications, so that quality of service of each application can be ensured to the greatest extent, and a problem that quality of a low-priority service is definitely impaired because rate limiting is directly performed on a low-priority application in the conventional technology is avoided.

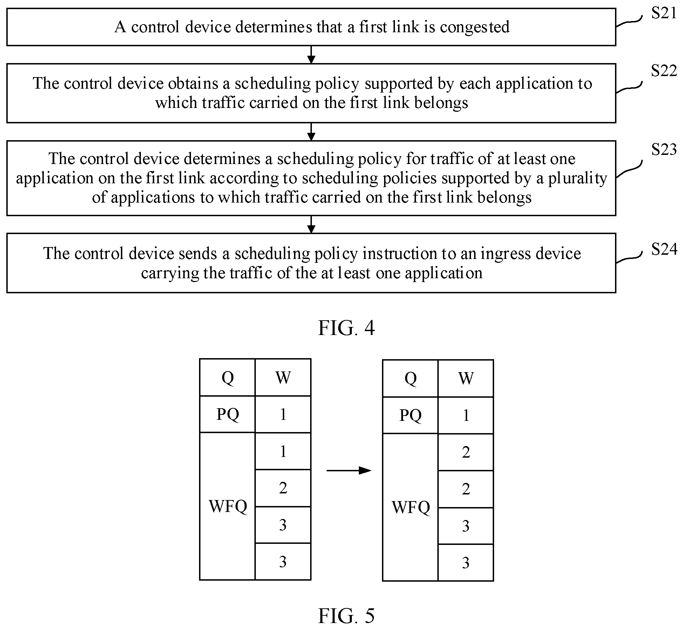

FIG. 4 is a flowchart of another scheduling policy determining method according to an embodiment of this application. The method may be applied to a control device, or may be applied to a network device. The following uses an example in which the method is applied to the control device for description. As shown in FIG. 4, the method includes the following steps.

S21: The control device determines that a first link is congested.

In a possible implementation, the control device receives traffic data sent by a network device, and determines, based on the traffic data, that the first link is congested.

For example, each network device (for example, each P device and each PE device in FIG. 1 and FIG. 2) collects traffic at an egress port and/or an ingress port, and then sends traffic data of a corresponding link to the control device. To enable the control device to know to which the collected traffic data belongs, a link identifier may be carried when the traffic data is sent.

For a link, whether the link is congested may be determined based on traffic sent by an egress port of a transmit end of the link, or traffic received by an ingress port of a receive end of the link.

For another example, an ingress device (for example, a PE device in FIG. 1 or FIG. 2) of a tunnel in a network collects traffic of the tunnel and/or collects traffic of an application, and then sends traffic data of the tunnel and/or the application to the control device. During collection, the traffic of the application is collected based on an application flow identifier, and the traffic of the tunnel is collected based on a tunnel identifier. Similarly, to enable the control device to know to which the collected traffic data belongs, the tunnel identifier, the application flow identifier, and the like may be carried for indication when the traffic data is sent.

Regardless of using the link, the tunnel, or the application as a collection granularity, the network device may collect the traffic data at a preset interval, for example, collect the traffic data every second, and send a piece of traffic data to the control device each time the piece of traffic data is collected. Certainly, the network device may alternatively collect the traffic data and send the traffic data after a period of time. For example, the network device collects the traffic data every second, and sends 60 pieces of collected traffic data to the control device every minute.

After obtaining the traffic data, the control device determines, based on the traffic data, whether each link in a network topology is congested. A manner of determining whether the link is congested is determining whether traffic carried on the link exceeds a congestion threshold. Different links may have respective corresponding congestion thresholds.

For a link, traffic carried on the link may be determined based on traffic data on the link, or may be determined based on traffic data of an application or a tunnel carried on the link. Details are not described herein.

In another possible implementation, the control device receives a first link congestion message sent by a network device, where the first link congestion message indicates that the first link is congested.

In this implementation, a process of determining congestion is completed by the network device. The network device may determine, in the foregoing manner, that a link is congested. The network device may alternatively determine, based on performance data that is of an egress port, an egress queue, or an ingress queue associated with the link and that is detected by the device, that the link is congested. For example, when a packet loss rate of the egress port is greater than a threshold, the network device determines that link congestion occurs on the link associated with the egress port. For another example, when a queue usage of the egress queue exceeds a threshold, or when duration in which a queue usage of the egress queue exceeds a threshold exceeds a duration threshold, the network device determines that link congestion occurs on the link associated with the egress queue.

S22: The control device obtains a scheduling policy supported by each application to which traffic carried on the first link belongs.

In a possible implementation, the scheduling policy supported by each application may be configured by a user on user equipment, and then sent to the control device.

In another possible implementation, the scheduling policy supported by each application may be pre-configured on the control device.

S23: The control device determines a scheduling policy for traffic of at least one application on the first link according to scheduling policies supported by a plurality of applications to which traffic carried on the first link belongs.

S24: The control device sends a scheduling policy instruction to an ingress device carrying the traffic of the at least one application, so that the ingress device executes the scheduling policy instruction.

After the control device determines the scheduling policy for the traffic of the at least one application, the control device may further generate a scheduling policy instruction for each of the at least one application, and configure the scheduling policy instruction for each application. For example, the control device sends the scheduling policy instruction to the ingress device carrying the application, to indicate the ingress device to execute the scheduling policy instruction. The ingress device is, for example, an ingress device of the tunnel.

Certainly, if the network device (for example, an ingress device of the tunnel) performs the method, the network device may directly generate the scheduling policy instruction and execute the scheduling policy instruction.

FIG. 2 is used as an example. A first link P2-P3 carries traffic of a PE1-PE2 tunnel and traffic of a PE3-PE2 tunnel. In the foregoing process, if a scheduling policy for an application carried on the PE1-PE2 tunnel is generated, the scheduling policy instruction is sent to the PE1; or if a scheduling policy instruction for an application carried on the PE3-PE2 tunnel is generated, the scheduling policy instruction is sent to the PE3; or if scheduling policy instructions for applications carried on the two tunnels are generated simultaneously, the scheduling policy instructions are sent to the PE1 and the PE3 simultaneously.

In embodiments of this application, the scheduling policy includes a lossless scheduling policy and a lossy scheduling policy. The lossy scheduling policy is a scheduling policy that causes a loss of a data packet of an application. The lossless scheduling policy is a scheduling policy that does not cause a loss of a data packet of an application.

The lossless scheduling policy includes at least one of the following: a path adjustment policy or a compression policy. The lossy scheduling policy includes a rate limiting policy. In addition, the scheduling policy further includes a pipe mapping adjustment policy. The pipe mapping adjustment policy may be a lossless scheduling policy or a lossy scheduling policy.

Whether the pipe mapping adjustment policy is lossy depends on a type of an adjusted pipe. For example, when a rate-limited pipe (tunnel or queue) exists, an application is mapped from a non-rate-limited pipe to the rate-limited pipe through pipe mapping adjustment, which belongs to the lossy scheduling policy. If an adjusted pipe is a non-rate-limited pipe, pipe mapping adjustment belongs to the lossless scheduling policy.

For example, the path adjustment policy includes a route adjustment policy, a tunnel traffic splitting path adjustment policy, a tunnel traffic splitting ratio adjustment policy, and the like.

The route adjustment policy is a policy for changing a transmission path of the traffic of the application. FIG. 1 is used as an example. Route adjustment is adjusting a route of the application from PE1-P1-PE2 to PE1-P2-P3-PE2.

The tunnel traffic splitting path adjustment is a policy for adjusting the traffic of the application from one path to another path of a tunnel, or creating a new path for a tunnel and adjusting the traffic of the application from one path to the new path of the tunnel. FIG. 2 is used as an example. The tunnel traffic splitting path adjustment may mean adjusting the application from a path PE1-P2-P3-PE2 to a path PE1-P1-PE2.

The tunnel traffic splitting ratio adjustment is a policy for adjusting a traffic splitting ratio of the traffic of the application on a plurality of paths of a tunnel. FIG. 2 is used as an example. A traffic splitting ratio of the traffic of the application on two paths PE1-P2-P3-PE2 and PE1-P1-PE2 of a tunnel is 1:1, and the traffic splitting ratio may be adjusted from 1:1 to 2:1 through tunnel traffic splitting ratio adjustment.

For example, the compression policy is a policy for compressing a data packet of the application based on a compression algorithm, and a bandwidth required for transmitting the data packet is reduced by compressing the data packet.

For example, the rate limiting policy includes an application traffic rate limiting policy, a rate limiting policy for a tunnel on which the traffic of the application is located, an application-mapped queue shaping policy, an application-mapped weighted fair queuing (weighted fair queuing, WFQ) weight adjustment policy, and the like.

The application traffic rate limiting policy is a policy for limiting a rate of the traffic of the application. For example, rate limiting is performed on a data packet that has an application flow identifier of the application.

The rate limiting policy for a tunnel on which the traffic of the application is located is a policy for limiting a rate of traffic on the entire tunnel. For example, rate limiting is performed on a data packet that carries a tunnel identifier. Rate limiting of the tunnel on which the traffic of the application is located may be configured by adjusting a committed access rate (committed access rate, CAR) value, and is usually performed on an ingress port of an ingress device of a tunnel. For example, a bandwidth of a tunnel on which an antivirus database downloading application is located is limited from 100 Mbps to 50 Mbps.

The application-mapped queue shaping (shaping) policy is a policy for limiting a rate of a queue to which an application is mapped. The queue herein is a sending queue of the network device. Usually, an operation is performed at an egress port of the ingress device of the tunnel. For example, a shaping value of a queue 1 is reduced from 100 Mbps to 50 Mbps.

The application-mapped WFQ weight adjustment policy is a policy for adjusting a weight of a WFQ queue, so that a bandwidth obtained by the queue changes. With reference to FIG. 5, the following describes WFQ weight adjustment by using an example. FIG. 5 is a diagram of WFQ weight adjustment according to an embodiment of this application. As shown in FIG. 5, Q represents a queue type, PQ represents that the queue type is a priority queue (priority queue), and WFQ represents that the queue type is weighted fair queuing. A PQ queue preferentially uses a link bandwidth, and a WFQ queue uses a remaining bandwidth. W represents a weight. During WFQ weight adjustment, weights of WFQ queues of the queue type are adjusted. Before adjustment, a weight ratio of four WFQ queues is 1:2:3:3. After adjustment, a weight ratio of the four WFQ queues is 2:2:3:3. A weight of a 1^{st} WFQ queue is increased, which equivalently decreases weights of other WFQ queues.

For example, the pipe mapping adjustment policy includes a tunnel mapping adjustment policy, a queue mapping adjustment policy, and the like.

The tunnel mapping adjustment policy is a policy for adjusting a tunnel to which the application is mapped, and adjusting the tunnel, to which the application is mapped, from one tunnel to another tunnel. For example, a tunnel A and a tunnel B exist, an application A is originally mapped to the tunnel A, and the application A is mapped to the tunnel B through adjustment. If a rate of the tunnel B is not limited, adjustment is a lossless scheduling policy. If a rate of the tunnel B is limited, adjustment is a lossy scheduling policy.

The queue mapping adjustment policy is a policy for adjusting a queue to which an application is mapped, and adjusting the queue, to which the application is mapped, from one queue to another queue. For example, the network device has a queue A and a queue B, an application B is originally mapped to the queue A, and the application B is mapped to the queue B through adjustment. If a rate of the queue B is not limited, adjustment is a lossless scheduling policy. If a rate of the queue B is limited, the adjustment is a lossy scheduling policy. For example, an antivirus database downloading application is originally mapped to the queue A. The queue A is a non-rate-limited queue. The queue B is a rate-limited queue configured with queue shaping. To protect a bandwidth of another application in the queue A, the antivirus database downloading application is mapped to the queue B.

In a possible implementation, the scheduling policy supported by the application may be configured for each application, so that the control device can learn of the scheduling policy supported by each application.

In another possible implementation, configuration is not performed on each application, but a scheduling policy supported by the application by default is configured. In this case, applications support these scheduling policies by default.

In still another possible implementation, supported scheduling policies are separately configured for some applications, and no supported scheduling policy is separately configured for other applications. These applications support scheduling policies supported by the applications by default.

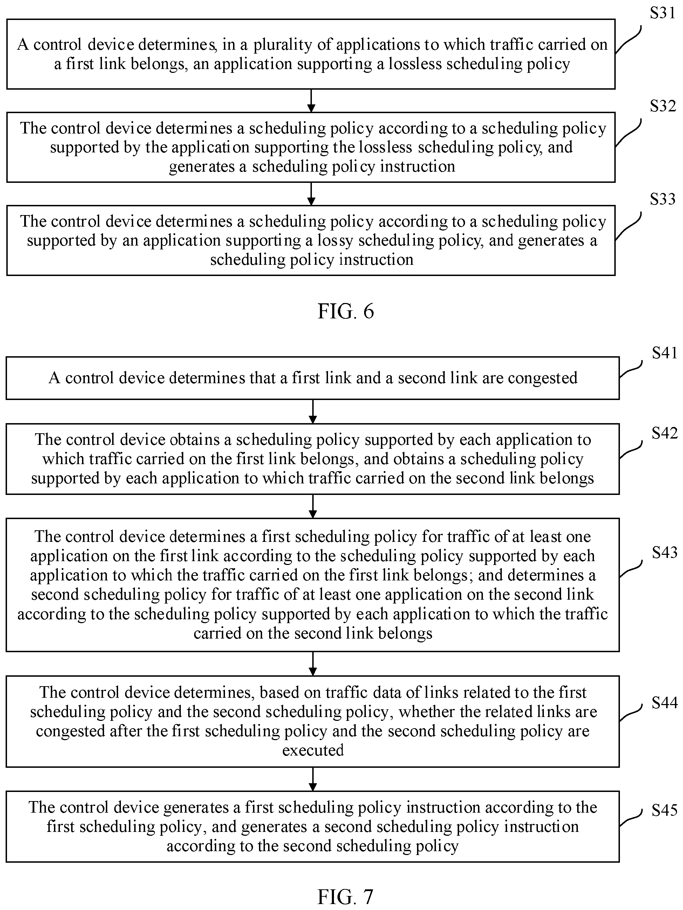

With reference to FIG. 6, for example, the following describes a detailed process of determining a scheduling policy in this application. FIG. 6 is a flowchart of another scheduling policy determining method according to an embodiment of this application. The method may be applied to a control device, or may be applied to a network device. The following uses an example in which the method is applied to the control device for description. As shown in FIG. 6, the method includes the following steps.

S31: The control device determines, in a plurality of applications to which traffic carried on a first link belongs, an application supporting a lossless scheduling policy.

When the application supporting the lossless scheduling policy exists, step S32 is performed; or when the application supporting the lossless scheduling policy does not exist, step S33 is performed.

S32: The control device determines a scheduling policy according to a scheduling policy supported by the application supporting the lossless scheduling policy, and generates a scheduling policy instruction.

For example, the scheduling policy instruction includes an identifier of a to-be-scheduled application, an identifier of a to-be-used scheduling policy, and a scheduling-related parameter. The scheduling-related parameter is a parameter value involved during scheduling execution, for example, an identifier of an adjusted link during path adjustment.

In step S32, in response to that one application supports the lossless scheduling policy, it is determined that the scheduling policy includes the scheduling policy supported by the application supporting the lossless scheduling policy. In response to that a plurality of applications support the lossless scheduling policy, it is determined that the scheduling policy includes a scheduling policy supported by at least one of the plurality of applications supporting the lossless scheduling policy.

When a plurality of applications support the lossless scheduling policy, the control device may determine the scheduling policy in the following manner:
combining the application supporting the lossless scheduling policy and the scheduling policy supported by the application, to obtain at least one policy combination (some or all possible combinations), where each policy combination corresponds to a scheduling policy for at least one application; determining whether congestion on the first link can be resolved when scheduling is performed according to the scheduling policy corresponding to each of the at least one policy combination; and selecting, in response to that a policy combination that can resolve the congestion on the first link exists, a combination from the policy combination that can resolve the congestion on the first link, and using a scheduling policy corresponding to the selected policy combination as the determined scheduling policy.

The combination of the application and the scheduling policy is actually combination performed by using the scheduling policy as precision. For example, an application A supports a scheduling policy a and a scheduling policy b. During combination, the application A has two manners of joining the combination: application A-scheduling policy a and application A-scheduling policy b. In other words, one policy combination includes the application A-scheduling policy a, and the other policy combination includes the application A-scheduling policy b.

In addition, during combination, combination may be performed based on a condition, for example, an application whose priority is lower than a threshold is selected for combination. The condition herein is not limited in this application.

If there is no combination that can resolve the congestion on the first link, combination and selection continue until all combination manners are exhaustively listed. When there is still no combination that can resolve the congestion, the control device performs step S33.

For example, the control device selects, based on at least one of a priority of an application and an application requirement, a policy combination from the policy combination that can resolve the congestion on the first link.

The following first describes the priority of the application and the application requirement, and then describes how to select an application.

The priority of the application may be represented by a number, for example, 1, 2, or 3. Generally, a larger number indicates a lower priority.

The application requirement includes at least one of the following: a bandwidth requirement, a delay requirement, a packet loss requirement, a jitter requirement, a service level agreement requirement, and a customer experience requirement.

The bandwidth requirement may include a collection bandwidth requirement and a guaranteed bandwidth requirement. The collection bandwidth requirement refers to a bandwidth occupied by traffic data collected when traffic collection is performed on the application. When the collection bandwidth requirement is limited, it is ensured that sufficient traffic data is collected for the application, and the traffic data is used as data support for determining a scheduling policy. The guaranteed bandwidth requirement is used to limit a minimum guaranteed bandwidth, a maximum guaranteed bandwidth, and/or a guaranteed bandwidth range that are required by an application. The minimum guaranteed bandwidth is a minimum bandwidth that needs to be guaranteed, and may be limited by a committed information rate (committed information rate, CIR), for example, 50 Mbps. The maximum guaranteed bandwidth is an upper limit of the guaranteed bandwidth, and may be limited by a peak information rate (peak information rate, PIR), for example, 100 Mbps. The guaranteed bandwidth range includes a minimum bandwidth and a maximum bandwidth to be guaranteed, for example, 50 Mbps to 100 Mbps.

In a possible implementation, the control device selects a scheduling policy corresponding to a policy combination with a lower priority based on the priority of each application.

For example, there are two combinations that can resolve the congestion problem on the first link. One combination is an application A and an application B (for ease of description, a scheduling policy supported by each application is omitted herein), and the other combination is an application C and an application D. Priorities of applications A to D are 1, 2, 3, and 4 respectively. In this case, a priority of the combination of the application C and the application D is lower, and the control device selects the combination of the application C and the application D for scheduling. Generally, when a combination includes a plurality of applications, an average priority or a highest priority may be considered to be used as a priority of the combination.

In this implementation, it can be ensured that impact on a service of a high-priority application is avoided by scheduling a low-priority service.

In another possible implementation, the control device selects a scheduling policy corresponding to a policy combination that can meet the application requirement in the policy combination based on the application requirement of each application.

For applications that are not separately configured with supported scheduling policies, the scheduling policies are selected and combined from the supported scheduling policies by default. In this case, the selected scheduling policy may not match the application requirement. Therefore, this situation needs to be excluded to ensure the quality of service of the application.

For example, if the application A has a low delay requirement, executing a compression policy on the application A does not match a requirement of the application A. The compression policy relates to a compression process of a data sender and a decompression process of a data receiver. Both processes cause extra delay. During selection, a combination of the compression policy including the application A is filtered out.

In still another possible implementation, the control device selects, based on the priority of each application and the application requirement of each application, a scheduling policy corresponding to a combination with a lower priority in the combination that can meet the application requirement in the combination.

For how to determine the priority and how to determine whether the application requirement is met, refer to the foregoing descriptions. Details are not described herein again.

Regardless of whether there are one or more applications that support the lossless scheduling policy, in a process of determining the scheduling policy, whether the determined scheduling policy can resolve the congestion problem on the first link needs to be considered.

In a possible implementation, the control device determines, based on current traffic data and according to the selected scheduling policy, whether the congestion problem on the first link can be resolved after scheduling. For example, the control device calculates, based on a current value of traffic on the first link and reduced traffic after scheduling, whether the first link is still congested after scheduling is completed.

In another possible implementation, the control device determines, based on predicted traffic data and according to the selected scheduling policy, whether the congestion problem on the first link can be resolved after scheduling. For example, the control device may predict traffic data of each application based on a traffic profile of the application, and then determine, according to the selected scheduling policy and based on a value of traffic expected to be carried on the first link and a congestion threshold, whether the first link is still congested.

For example, the control device separately predicts traffic data of each application based on a traffic profile of each application; determines, according to the scheduling policy corresponding to a first policy combination and based on the predicted traffic data of each application, a value of traffic expected to be carried on the first link; and determines, based on the value of traffic expected to be carried on the first link, whether the first link is congested. The first policy combination is any one of the at least one policy combination.

For example, whether congestion occurs is determined based on the value of traffic expected to be carried and the congestion threshold.

The control device generates the traffic profile of each application based on a traffic sequence of each application. The traffic sequence usually corresponds to long time, for example, one or more days, so that the traffic profile can be accurately depicted.

The traffic profile refers to a traffic characteristic obtained based on the traffic sequence, for example, includes characteristics such as a traffic mode, a traffic peak value, and a peak-to-average ratio.

After the traffic profile of the application is determined, traffic data (for example, a traffic peak) of the application in a period of time may be predicted. If the scheduling policy corresponding to the first policy combination is used, an application carried on the first link may be determined according to the scheduling policy for the first policy combination. The value of traffic expected to be carried on the first link is determined based on the predicted traffic data of the application carried on the first link, and then it is predicted whether congestion still occurs, that is, whether the congestion problem is resolved.

In this implementation, the scheduling policy is determined based on the predicted traffic data, so that the scheduling policy executed by the network device can better match future traffic carried on the link, congestion that may occur on the link in the future can be further alleviated, scheduling is performed less frequently, and network resources are saved.

S33: The control device determines a scheduling policy according to a scheduling policy supported by an application supporting a lossy scheduling policy, and generates a scheduling policy instruction.

Except the application that supports the lossless scheduling policy and that is determined in step S31, another application is an application that supports the lossy scheduling policy.

When the lossy scheduling policy is determined, in addition to determining a to-be-scheduled application and a to-be-used policy like the lossless scheduling policy, a parameter such as a rate limiting value during lossy scheduling is further determined.

Similarly, when the lossy scheduling policy is determined, combinations of applications and policies may also be listed in a combination manner, and then a policy combination that can resolve the congestion on the first link is selected from the combinations. If all policy combinations cannot resolve the congestion, a policy combination that cannot resolve the congestion is selected. The parameter involved in scheduling uses a default value or a corresponding value required by an application. For example, if a rate limiting scheduling policy is involved, a rate limiting value is set based on a minimum guaranteed bandwidth supported by an application.

During selection, at least one of a priority of an application and an application requirement may still be considered. A selection method is the same as that of lossless scheduling, and details are not described herein again.

For example, an application requirement of a key application includes a bandwidth requirement, and a minimum guaranteed bandwidth is high. In this case, a policy combination in which a scheduling policy for the key application is a rate limiting policy may be excluded.

For another example, an application requirement of a disaster recovery application includes a bandwidth requirement, and a minimum guaranteed bandwidth is low. In this case, a policy combination in which a scheduling policy for the disaster recovery application is a rate limiting policy may be included in a selection range.

In embodiments of this application, the rate limiting policy may be executed for an application, or may be executed for a tunnel. For example, when a tunnel includes only a single application, if the single application supports a rate limiting policy, rate limiting may be directly performed on the tunnel. For another example, when a plurality of applications carried on a tunnel all support a rate limiting policy, rate limiting may be directly performed on the tunnel.

Because the solutions provided in this application can implement scheduling at different granularities, for example, an application granularity and a tunnel granularity, traffic scheduling in this application is more refined based on the scheduling solutions at different granularities, and link congestion is more easily alleviated.

In the foregoing scheduling policy determining process, only scheduling of traffic of an application on the first link is considered, so that the first link is no longer congested. However, if the path adjustment policy or the pipe mapping adjustment policy transfers the traffic on the first link to another link, congestion may occur on the another link. To avoid this situation, when the path adjustment policy and the pipe mapping adjustment policy are used, a congestion status of another affected link after scheduling further needs to be considered.

For example, in step S32, the scheduling policy is first determined based on at least one of a priority of an application and an application requirement. If the scheduling policy includes one of a path adjustment policy, a tunnel traffic splitting path adjustment policy, or a pipe mapping adjustment policy, a link (a link other than the first link) related to the scheduling policy is determined. Whether the link related to the scheduling policy is congested is determined based on traffic data of the link related to the scheduling policy after the scheduling policy is executed. If congestion does not occur, the scheduling policy is used to generate a scheduling policy instruction. If congestion occurs, a scheduling policy is re-determined based on step S32.

If all possible scheduling manners in step S32 cause congestion on the link related to the scheduling policy, step S33 is performed.

In step S33, similarly, if the scheduling policy includes the pipe mapping adjustment policy, whether congestion occurs on a link related to the scheduling policy also needs to be considered. If congestion does not occur, the scheduling policy is used to generate a scheduling policy instruction. If congestion occurs, a scheduling policy is re-determined based on step S33.

The foregoing embodiments are mainly for a method for determining a scheduling policy when a link is congested. However, when two or more links are congested in a network simultaneously, for example, two links, a scheduling policy for each of the two links is separately determined, and a scheduling objective is that a link related to the scheduling policy is not congested. With reference to FIG. 7, for example, the following describes a detailed process of determining a scheduling policy when there are two or more congested links. FIG. 7 is a flowchart of another scheduling policy determining method according to an embodiment of this application. The method may be applied to a control device, or may be applied to a network device. The following uses an example in which the method is applied to the control device for description. As shown in FIG. 7, the method includes the following steps.

S41: The control device determines that a first link and a second link are congested.

The first link and the second link are any two congested links. FIG. 2 is used as an example. The first link is P1-PE2 (belonging to the path PE1-P1-PE2), and the second link is P2-P3 (belonging to the path PE1-P2-P3-PE2).

Herein, only a case of two links is used as an example for description. An implementation solution of congestion on a plurality of links is essentially the same as that of congestion on two links.

S42: The control device obtains a scheduling policy supported by each application to which traffic carried on the first link belongs, and obtains a scheduling policy supported by each application to which traffic carried on the second link belongs.

S43: The control device determines a first scheduling policy for traffic of at least one application on the first link according to the scheduling policy supported by each application to which the traffic carried on the first link belongs; and determines a second scheduling policy for traffic of at least one application on the second link according to the scheduling policy supported by each application to which the traffic carried on the second link belongs.

S44: The control device determines, based on traffic data of links related to the first scheduling policy and the second scheduling policy, whether the related links are congested after the first scheduling policy and the second scheduling policy are executed; and performs step S45 if the related links are not congested, or performs step S43 again if the related links are congested.

For each related link, it is determined, based on collected traffic data, whether congestion occurs after scheduling. For a detailed step of determining, refer to step S32.

S45: The control device generates a first scheduling policy instruction according to the first scheduling policy, and generates a second scheduling policy instruction according to the second scheduling policy.

When scheduling is performed on congestion of a plurality of links, a scheduling policy for congestion of each link does not cause congestion of another link. In other words, this solution takes an entire network as a scheduling object, and can schedule traffic globally to resolve the congestion problem in the network.

In the foregoing scheduling policy determining process, a benefit after scheduling may be predicted, and the benefit indicates a congested link improvement status. After the scheduling is completed, an actual benefit of the scheduling is determined. On one hand, the actual benefit may be fed back to user equipment for visualized display. On the other hand, based on a deviation between the expected benefit and the actual benefit, guidance may be provided for determining a subsequent scheduling policy, so that an effect after scheduling is better.

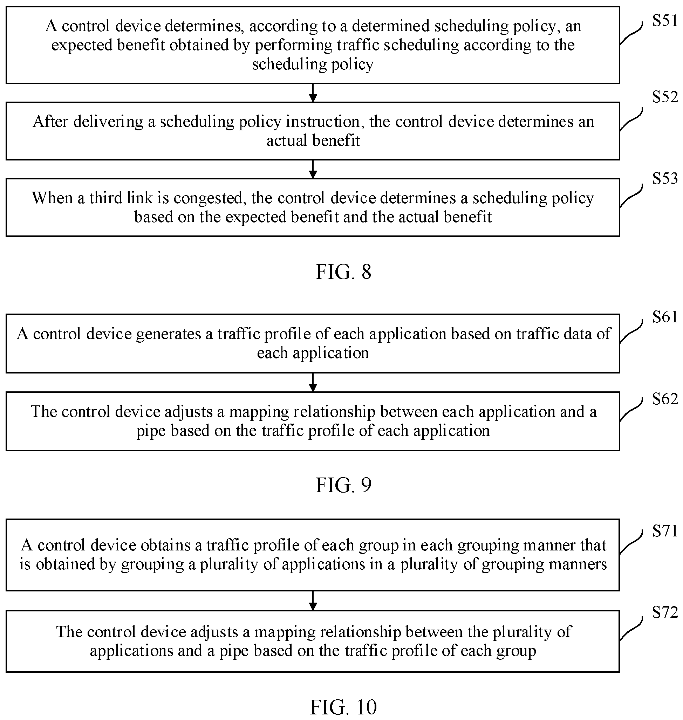

With reference to FIG. 8, for example, the following describes how to adjust a process of determining a scheduling policy based on a benefit. FIG. 8 is a flowchart of another scheduling policy determining method according to an embodiment of this application. The method may be applied to a control device, or may be applied to a network device. The following uses an example in which the method is applied to the control device for description. As shown in FIG. 8, the method includes the following steps.

S51: The control device determines, according to a determined scheduling policy, an expected benefit obtained by performing traffic scheduling according to the scheduling policy.

Step S51 is performed before the scheduling policy is applied. In other words, a benefit generated by applying the scheduling policy is predicted.

Traffic data of a first link after the scheduling policy is executed is predicted based on traffic data of the first link. The expected benefit after scheduling is determined based on the predicted traffic data of the first link.

The expected benefit may include: a quantity of reduced congested links, a reduced ratio of traffic occupation of congested links, and the like.

S52: After delivering a scheduling policy instruction, the control device determines an actual benefit.

In a possible implementation, the control device receives traffic data after scheduling sent by a network device, and determines the actual benefit of the first link based on the traffic data.

In another possible implementation, the control device receives the actual benefit sent by the network device.

In this step, parameter types included in the actual benefit and the expected benefit are the same, and details are not described again.

S53: When a third link is congested, the control device determines a scheduling policy based on the expected benefit and the actual benefit.

The third link may be the first link or the second link described above, or may be a link other than the first link and the second link.

Herein, when determining the scheduling policy, the control device additionally considers a deviation between the expected benefit and the actual benefit in addition to the foregoing factors that need to be considered. For example, if the actual benefit does not reach the expected benefit, when the scheduling policy is determined for the third link, a threshold lower than a congestion threshold of the third link may be used as a target for scheduling. In this way, traffic scheduling strength is higher, so that a final actual benefit can meet a requirement. On the contrary, if the actual benefit exceeds the expected benefit, when the scheduling policy is determined for the third link, a threshold higher than the congestion threshold of the third link may be used as a target for scheduling. If the actual benefit is equivalent to the expected benefit, scheduling is performed by using the congestion threshold of the third link as a target.

Traffic scheduling described above is mainly to resolve a link congestion problem. In addition, in this application, pipe mapping adjustment may be performed on some applications without considering link congestion, which is equivalent to executing a pipe mapping adjustment policy. The following provides example descriptions with reference to FIG. 9 and FIG. 10. FIG. 9 is a flowchart of another scheduling policy determining method according to an embodiment of this application. The method may be applied to a control device, or may be applied to a network device. The following uses an example in which the method is applied to the control device for description. As shown in FIG. 9, the method includes the following steps.

S61: The control device generates a traffic profile of each application based on traffic data of each application.

S62: The control device adjusts a mapping relationship between each application and a pipe based on the traffic profile of each application, where the pipe includes at least one of a tunnel and a queue.

For example, that the control device adjusts a mapping relationship between each application and a pipe based on the traffic profile of each application includes: the control device maps, based on a traffic mode of each application, applications in a same traffic mode to a same pipe, and maps applications in different traffic modes to different pipes.

In this implementation, traffic of the applications in the same traffic mode is mapped to the same pipe, so that traffic characteristics of different pipes are more easily distinguished, and management, control, and scheduling of each pipe are facilitated.

The traffic of the applications in the same traffic mode is mapped to the same pipe. In other words, applications in various traffic modes are classified, so that traffic of a classified pipe has a characteristic of a traffic mode corresponding to an included application. Because a change trend of each traffic mode is known, a traffic change trend of each pipe after the mapping is known, and this facilitates scheduling and management.

Herein, the traffic mode refers to a traffic change trend reflected by a traffic profile, and includes a small-value oscillation type, a burst glitch type, a stable double-peak type, a flapping double-peak type, and the like. The determining the traffic mode based on the traffic data is actually determining the traffic mode based on a change trend of a waveform diagram formed based on the traffic data. A detailed process of determining the traffic mode is not described herein again.

The traffic mode indicates a change trend of a traffic value of an application in a first time period. The first time period may be a time period for collecting the traffic data. In the small-value oscillation traffic mode, traffic in most of the time (for example, more than 50%) within a collection period is a low traffic value (for example, 1 to 3 Mb/s). In the burst glitch traffic mode, a span of a traffic value in a traffic sequence is large, ranging from several Mb/s to hundreds of Mb/s. The traffic changes irregularly. In other words, no obvious peak or trough is formed. In the stable double-peak traffic mode, a traffic value in a flow sequence changes based on a peak-trough-peak waveform, and there are few traffic glitches in peaks and troughs. In the flapping double-peak traffic mode, traffic in a traffic sequence changes based on a peak-trough-peak waveform, and there are many (more than that in the stable double-peak traffic mode) traffic glitches in peaks and troughs.

FIG. 10 is a flowchart of another scheduling policy determining method according to an embodiment of this application. The method may be applied to a control device, or may be applied to a network device. The following uses an example in which the method is applied to the control device for description. As shown in FIG. 10, the method includes the following steps.

S71: The control device obtains a traffic profile of each group in each grouping manner that is obtained by grouping a plurality of applications in a plurality of grouping manners, where each group includes at least one application.

For example, the plurality of applications are applications involved in first traffic statistics data.

S72: The control device adjusts a mapping relationship between the plurality of applications and a pipe based on the traffic profile of each group, where the pipe includes at least one of a tunnel and a queue.

For example, that the control device adjusts a mapping relationship between the plurality of applications and a pipe involved in the traffic statistics data based on the traffic profile of each group includes: The control device selects, based on a stability degree of the traffic profile of each group in each grouping manner, a grouping manner whose stability degree meets a stability degree condition; and the control device maps applications in a same group under the selected grouping manner to a same pipe and applications in different groups under the selected grouping manner to different pipes.

The stability degree refers to a degree of stability, and may be evaluated based on a parameter like a traffic mode and a peak-to-average ratio of traffic. In the selection process, a traffic mode may be selected as a small-value oscillation or a stable double-peak type, and then a peak-to-average ratio meeting a requirement in these traffic modes is selected.

In this implementation, different profile types are combined together to complement each other, for example, a double-peak type and a glitch type are combined together, so that a combined traffic profile of a pipe is more stable. This combination makes the traffic of the obtained pipe stable, and can reduce a number of times of link bandwidth adjustment.

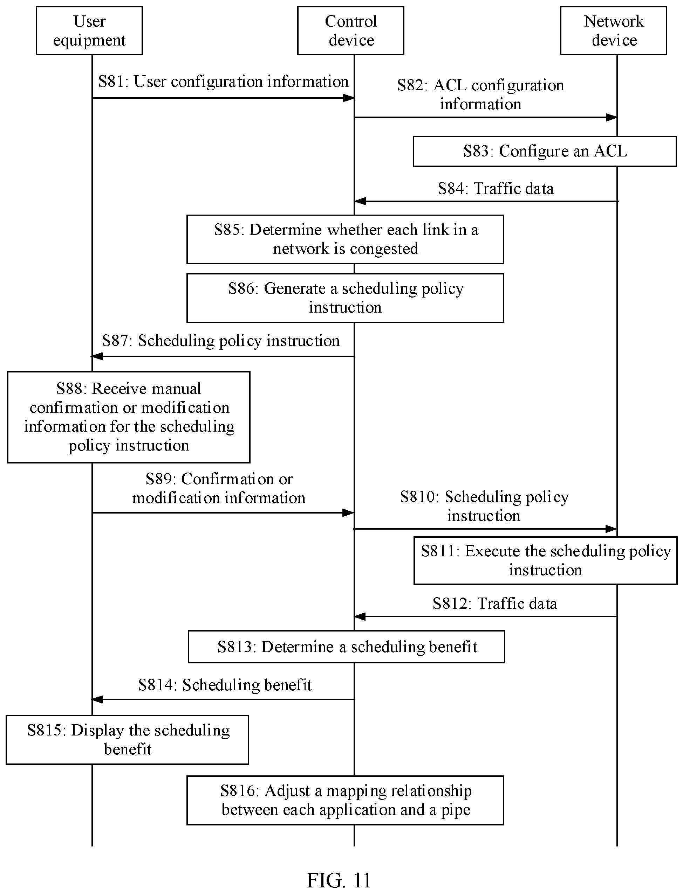

FIG. 11 is a flowchart of another scheduling policy determining method according to an embodiment of this application. The method may be jointly performed by the control device, the network device (the ingress device of the tunnel) in the application scenario shown in FIG. 1 or FIG. 2, and user equipment (the user equipment may be a server device) that is not shown in the figure. As shown in FIG. 11, the method includes the following steps.

S81: The user equipment sends user configuration information to the control device. The control device receives the user configuration information sent by the user equipment.

The user configuration information includes at least one of a priority of an application, an application requirement, or an application support policy.

The following describes the user configuration information through examples:
for example, application (application, APP) 1, priority 6, application requirement: minimum guaranteed bandwidth = 10 Mbps, and application support policy: application rate limiting policy;
APP 2, priority 5, application requirement: minimum guaranteed bandwidth = 50 Mbps, application support policy: tunnel mapping adjustment policy, tunnel traffic splitting path adjustment policy, and application rate limiting policy;
APP 3, priority 4, application requirement: minimum guaranteed bandwidth = 80 Mbps, application support policy: tunnel mapping adjustment policy, tunnel traffic splitting path adjustment policy, and application rate limiting policy;
APP 4, priority 3, application requirement: minimum guaranteed bandwidth = 80 Mbps, application support policy: tunnel mapping adjustment policy, and application rate limiting policy; and
APP 5, priority 2, application support policy: route adjustment policy.

To ensure that the network device can distinguish between applications, the user configuration information may include a definition of each application. The definition of each application may be distinguished based on application flow identification information. The application flow identification information is implemented based on an Internet Protocol (Internet Protocol, IP) network segment, a 5-tuple, or an application aware networking (application aware networking, APN) identifier.

For example, the application flow identification information may be one of the following:
a 2-tuple including a source IP address segment and a destination IP address segment;
a 5-tuple including a source IP address, a destination IP address, a source port, a destination port, and a protocol number; and
an APN 6 identifier, where an APN identifier is usually formed by a source IP address segment-destination IP address segment and a service level agreement (service level agreement, SLA).

Step S81 is an optional step. In addition to being configured by the user equipment to the control device, the user configuration information may alternatively be directly configured in the control device without participation of the user equipment.

Before step S81, a network completes mapping configuration between an application and a tunnel, and mapping configuration between an application and a queue. Usually, the mapping configuration between the application and the tunnel, and the mapping configuration between the application and the queue are completed based on the priority of the application.

S82: The control device sends access control list (access control list, ACL) configuration information to the network device. The network device receives the ACL configuration information sent by the control device.

The ACL configuration information indicates, to the network device, which traffic can pass through and which traffic needs to be blocked.

Step S82 is an optional step. In addition to being configured by the control device to the network device, the ACL configuration information may alternatively be directly configured in the network device without participation of the control device.

S83: The network device performs ACL configuration based on the ACL configuration information.

Access control is performed on the traffic based on the ACL configuration information received in step S82. Details are not described in this application.

S84: The network device collects traffic data, and sends the collected traffic data to the control device. The control device receives the traffic data sent by the network device.

When the traffic data is collected, the traffic data may be collected in a single dimension, for example, only traffic data of each application is collected, or the traffic data may be collected in a plurality of dimensions, for example, traffic data of each application and each tunnel is collected simultaneously.

In addition to collecting traffic by the network device in the foregoing manner, the network device may not distinguish between applications, and the control device distinguishes between applications after the network device sends the traffic to the control device. For example, the control device aggregates traffic of a same application based on a source IP address and a destination IP address of the traffic, to determine traffic data of each application.

S85: The control device determines, based on the traffic data, whether each link in a network is congested.

Usually, causes of link congestion include a link fault and a sharp increase in service traffic corresponding to an application (for example, a sharp increase in service traffic caused by a temporary video conference). The link fault includes a line fault, a device fault, and the like.

In addition to directly determining, based on the traffic data of the link, whether the link is congested, whether the link is congested may alternatively be determined based on an application carried on the link or traffic data of a tunnel mapped to the link.

For example, step S85 may include: The control device determines traffic data of each link in the network based on the traffic data of each tunnel and a mapping relationship between a tunnel and a link; and the control device determines, based on the traffic data of each link in the network, whether each link in the network is congested.

In one case, the network device sends the traffic data of each application, and the traffic data of each tunnel may be determined based on the traffic data of each application. In another case, the network device sends the traffic data of each tunnel.

As shown in FIG. 2, traffic data of the link P2-P3 in the figure may be determined based on traffic of tunnels of the path PE1-P2-P3-PE2 and the path PE3-P2-P3-PE2. If the two tunnels pass through only the two paths, the traffic data of the link P2-P3 can be obtained by summing up the traffic of the two tunnels. If the tunnel passing through the path PE1-P2-P3-PE2 also passes through the path PE1-P1-PE2, a traffic splitting ratio of the tunnel on the two paths needs to be considered. The traffic passing through the path PE1-P2-P3-PE2 is determined based on the traffic splitting ratio, and the traffic passing through the path PE1-P2-P3-PE2 is added to the traffic passing through the path PE3-P2-P3-PE2, to obtain the traffic data of the link P2-P3.

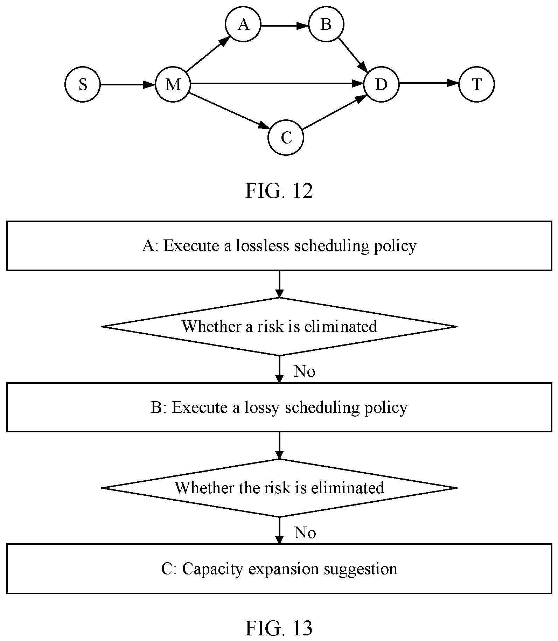

FIG. 12 is a diagram of a network topology according to an embodiment of this application. A node S is an ingress device of a tunnel, and a tunnel simultaneously includes three paths (S-M-C-D-T, S-M-D-T and S-M-A-B-D-T) in the figure. When traffic of a link M-D is determined, traffic of an intermediate path, that is, traffic data of the link M-D, is determined based on a traffic splitting ratio of the three paths in the tunnel.

In this implementation, a control device determines, based on traffic data sent by each network device, whether network congestion exists, and the control device performs comprehensive analysis based on a traffic status of an entire network, to avoid a case in which it is difficult to determine comprehensively only through partial analysis.

S86: When the first link is congested, the control device generates a scheduling policy instruction for traffic of at least one application on the first link according to a scheduling policy supported by each application to which the traffic carried on the first link belongs.

S87: The control device sends the scheduling policy instruction to the user equipment. The user equipment receives the scheduling policy instruction.

Optionally, in addition to sending the to-be-executed scheduling policy instruction to the user equipment for manual confirmation, the control device may further calculate an expected benefit that can be obtained if the scheduling policy instruction is executed. The benefit may be a congestion improvement status, for example, a quantity of reduced congested links, and a reduced ratio of traffic occupation of congested links. The expected benefit is sent to the user equipment for display, so that an expected effect can be more clearly perceived by a person before decision-making, and decision-making is simplified. An execution effect after decision-making not only visualizes the benefit of the decision-making, but also can be used as experience feedback for next decision-making.

S88: The user equipment receives manual confirmation or modification information for the scheduling policy instruction.

S89: The user equipment sends confirmation or modification information to the control device. The control device receives the confirmation or modification information sent by the user equipment, and determines a to-be-sent scheduling policy instruction.

Step S87 to step S89 are optional steps, and the control device may alternatively directly deliver the scheduling policy instruction without confirmation or modification of the user equipment.

S810: The control device sends the scheduling policy instruction to the network device. The network device receives the scheduling policy instruction.

The network device is an ingress device of a tunnel carrying the at least one application.

S811: The network device executes the scheduling policy instruction.

In this embodiment of this application, step S84 to step S811 may be cyclically performed. For example, after the scheduling policy instruction is executed once, traffic data is recollected, and when a link is still congested, a scheduling policy instruction is regenerated and executed.

In a process of cyclically performing step S84 to step S811, the scheduling policy selected by the scheduling policy instruction may be implemented in a sequence of preferentially selecting a lossless scheduling policy and then selecting a lossy scheduling policy.

FIG. 13 is a diagram of a scheduling process according to an embodiment of this application. As shown in FIG. 13, in step A, the lossless scheduling policy is first executed. When the lossless scheduling policy cannot relieve the congestion risk, in step B, the lossy scheduling policy is executed. When the lossy scheduling policy cannot relieve the congestion risk, in step C, a capacity expansion suggestion is provided. Both step A and step B may be performed once or more times.

In other words, the method may further include: The control device outputs the capacity expansion suggestion for the first link. In other words, when a current network capacity cannot meet an application bandwidth requirement of the first link, the capacity expansion suggestion for the first link is generated.

The foregoing path adjustment corresponds to the lossless scheduling policy, and rate limiting corresponds to the lossy scheduling policy. The lossless scheduling policy is preferentially selected to ensure the quality of service of each application. When lossless scheduling cannot resolve the link congestion, lossy scheduling is used to ensure quality of service of a core application.

In addition to providing the capacity expansion suggestion, in response to that the first link is in a light-load state, the control device may further output a capacity reduction suggestion for the first link.

S812: The network device collects traffic data again, and sends the collected traffic data to the control device. The control device receives the traffic data sent by the network device.

S813: The control device determines an actual benefit based on the traffic data.

For example, the actual benefit may include a quantity of reduced congested links, a reduced ratio of traffic occupation of congested links, and the like.

The actual benefit determining manner in step S812 and step S813 does not need to be calculated by the network device, and is calculated by the control device. Therefore, resource occupation of the network device is low.

In addition to the actual benefit determining manner in step S812 and step S813, in another manner, the network device determines the actual benefit, and then sends the actual benefit to the control device.

S814: The control device sends the actual benefit to the user equipment. The user equipment receives the actual benefit.

S815: The user equipment displays the actual benefit.

Step S812 to step S815 are optional steps.

In this implementation, the control device receives the traffic data that is sent by the network device and that is obtained by performing scheduling, determines, based on the traffic data, a benefit generated by scheduling, and sends the actual benefit to the user equipment for display, to feed back an effect of the scheduling policy determining solution to a user.

S816: The control device adjusts a mapping relationship between each application and a pipe, where the pipe includes at least one of a tunnel and a queue.

Herein, the control device adjusts the mapping relationship between each application and the pipe, and sends an adjusted mapping relationship to the network device, so that the network device also performs corresponding adjustment.

A sequence of step S816 and the steps S812 to S815 may not be determined, for example, step S816 is performed before step S812.

In addition to the scheduling policy executed when the link is congested, when the link is not congested, the mapping relationship of the pipe may alternatively be adjusted to improve network transmission.

This application supports application-based end-to-end refined network management requirements from configuration to scheduling; provides a basis for application characteristic visualization, exception discovery, intelligent scheduling, and management decision-making based on traffic profiling and characteristic analysis; performs scheduling management based on different granularities such as tunnels, paths, and applications to meet differentiated management requirements of customers; and performs scheduling based on a plurality of granularities to meet automatic optimization requirements and minimum loss optimization objectives of customers.

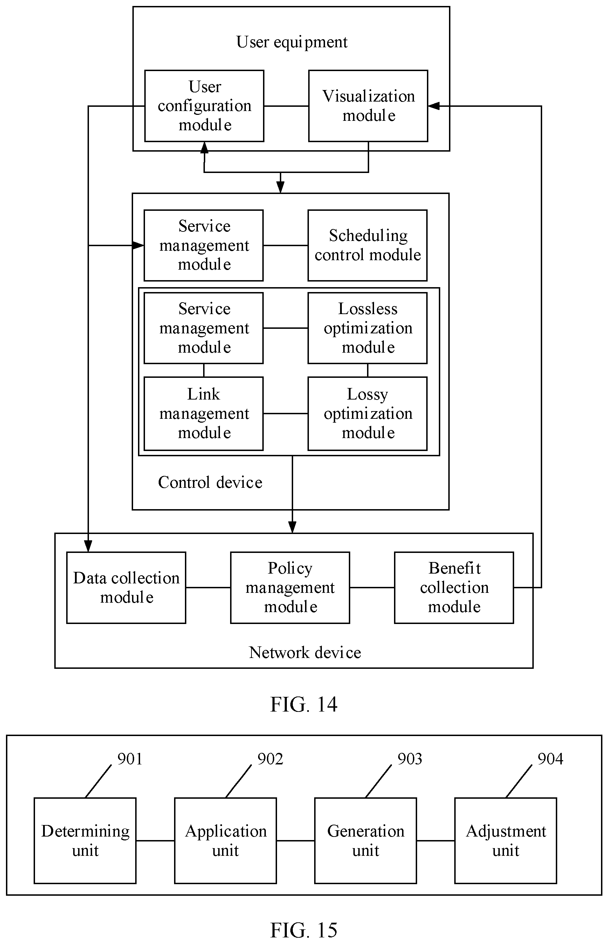

FIG. 14 is a diagram of modules of a system for performing the foregoing method according to an embodiment of this application. As shown in FIG. 14, user equipment includes a user configuration module. The user configuration module generates user configuration information based on a user input, that is, performs step S81.

As shown in FIG. 14, a network device includes a data collection module. The data collection module is configured to collect traffic data, and send the traffic data to a control device, that is, perform steps S84 and S812.

As shown in FIG. 14, the control device includes a service management module. The service management module is configured to determine, based on traffic data, whether each link is congested, that is, perform step S85.

As shown in FIG. 14, the control device further includes a scheduling control module, a pipe management module, a lossless optimization module, a lossy optimization module, and a link management module. The service management module is configured to generate a traffic profile based on the traffic data, to further predict a traffic trend. The scheduling control module is responsible for policy scheduling. The scheduling control module invokes the pipe management module, the lossless optimization module, the lossy optimization module, and the link management module, to generate a scheduling policy instruction. In addition, the scheduling control module is also configured to perform pipe deletion and output a network capacity expansion/reduction suggestion. The pipe management module is configured to implement mapping configuration between an initial application and a pipe. For example, a single core application is mapped to a single queue or tunnel, and a plurality of common-priority applications or low-priority applications are mapped to one queue or tunnel. In this way, when a bandwidth of the core application is ensured, precise lossy optimization scheduling can be achieved at a tunnel granularity. In addition, this manner can reduce massive tunnel overheads during single-application single-tunnel mapping. The lossless optimization module is configured to provide a lossless optimization scheduling policy. The lossy optimization module is configured to provide a lossy optimization scheduling policy. The link management module is configured to provide a link capacity expansion/reduction suggestion, a network topology design suggestion, and the like.

Step S86 is performed by the scheduling control module, the pipe management module, the lossless optimization module, the lossy optimization module, and the link management module together.

As shown in FIG. 14, the network device further includes a policy management module, configured to execute the scheduling policy instruction delivered by the control device, that is, perform step S811.

As shown in FIG. 14, the user equipment further includes a visualization module, configured to display an expected benefit and/or an actual benefit, that is, perform step S815.

It can be learned based on the system module structure provided in FIG. 14 that, in the solution provided in this application, visualization and sensorization of scheduling are implemented through the data collection module and the visualization module. In other words, a scheduling policy is completed through analysis and processing based on traffic statistics, and finally benefits are visualized. The scheduling policy is analyzed and recommended through the scheduling control module, the pipe management module, the lossless optimization module, the lossy optimization module and the link management module. The scheduling policy is manually confirmed or modified through the user configuration module and the visualization module, to implement decision-making on the scheduling policy. The scheduling decision is executed through the policy management module.

In addition, the visualization module can work with the control device to output an exception alarm and a prompt when a traffic mode is abnormal.

FIG. 15 is a block diagram of a scheduling policy determining apparatus according to an embodiment of this application. The scheduling policy determining apparatus may be implemented as all or a part of a control device by using software, hardware, or a combination thereof. The scheduling policy determining apparatus may include a determining unit 901 and an application unit 902.

The determining unit 901 is configured to determine, in response to that a first link is congested, a first scheduling policy for traffic of at least one application on the first link according to scheduling policies separately supported by a plurality of applications to which traffic carried on the first link belongs.

The application unit 902 is configured to apply the first scheduling policy.

Optionally, the determining unit 901 is configured to determine, in response to that an application supporting a lossless scheduling policy exists, the first scheduling policy according to a scheduling policy supported by the application supporting the lossless scheduling policy.

Optionally, the determining unit 901 is configured to: determine, in response to that one application supports the lossless scheduling policy, that the first scheduling policy is the scheduling policy supported by the application supporting the lossless scheduling policy; or determine, in response to that a plurality of applications support the lossless scheduling policy, that the first scheduling policy includes a scheduling policy supported by at least one of the applications supporting the lossless scheduling policy.

Optionally, the determining unit 901 is configured to: combine the application supporting the lossless scheduling policy and the scheduling policy supported by the application, to obtain at least one policy combination, where each policy combination corresponds to a scheduling policy for at least one application; determine whether congestion on the first link can be resolved when scheduling is performed according to the scheduling policy corresponding to each of the at least one policy combination; and select, in response to that a policy combination that can resolve the congestion on the first link exists, a policy combination from the policy combination that can resolve the congestion on the first link, and use a scheduling policy corresponding to the selected policy combination as the first scheduling policy.

Optionally, the determining unit 901 is configured to determine, based on the predicted traffic data and according to a scheduling policy corresponding to a first policy combination, whether the scheduling policy corresponding to the first policy combination can resolve the congestion on the first link, where the first policy combination is any one of the at least one policy combination.

Optionally, the determining unit 901 is configured to: predict traffic data of each application based on traffic profiles of the plurality of applications; determine, according to the scheduling policy corresponding to the first policy combination and based on the predicted traffic data of each application, a value of traffic expected to be carried on the first link; and determine, based on the value of traffic expected to be carried on the first link, whether the first link is congested.

Optionally, the determining unit 901 is configured to select, based on at least one of a priority of an application and an application requirement, the policy combination from the policy combination that can resolve the congestion on the first link.

Optionally, the determining unit 901 is configured to determine, in response to that no application supporting the lossless scheduling policy exists, the first scheduling policy according to a scheduling policy supported by an application supporting the lossy scheduling policy.

Optionally, the determining unit 901 is further configured to: determine a link related to the first scheduling policy; and determine, based on traffic data of the link related to the first scheduling policy, whether the link related to the first scheduling policy is congested after the first scheduling policy is executed.

The apparatus further includes a generation unit 903, configured to generate, in response to that the link related to the first scheduling policy is not congested, a first scheduling policy instruction according to the first scheduling policy.

Optionally, the determining unit 901 is further configured to: determine, in response to that a second link is congested, a second scheduling policy for traffic of at least one application on the second link according to scheduling policies separately supported by a plurality of applications to which traffic carried on the second link belongs; determine links related to the first scheduling policy and the second scheduling policy; and determine, based on traffic data of the related links, whether the links related to the first scheduling policy and the second scheduling policy are congested after the first scheduling policy and the second scheduling policy are executed.

The generation unit 903 is configured to: in response to that the related links are not congested, generate a first scheduling policy instruction according to the first scheduling policy and generate a second scheduling policy instruction according to the second scheduling policy.

Optionally, the determining unit 901 is further configured to: determine, before the first scheduling policy is applied, an expected benefit obtained by performing traffic scheduling according to the first scheduling policy; determine an actual benefit after the first scheduling policy is applied; and determine, in response to that a third link is congested, a third scheduling policy based on the expected benefit and the actual benefit.

Optionally, the generation unit 903 is configured to generate a traffic profile of each application based on traffic data of the plurality of applications.

The apparatus further includes an adjustment unit 904, configured to adjust a mapping relationship between each application and a pipe based on the traffic profile of each application, where the pipe includes at least one of a tunnel and a queue.

Optionally, the generation unit 903 is configured to obtain a traffic profile of each group in each grouping manner that is obtained by grouping the plurality of applications in a plurality of grouping manners, where each group includes at least one application.

The adjustment unit 904 is configured to adjust a mapping relationship between the plurality of applications and a pipe based on the traffic profile of each group, where the pipe includes at least one of a tunnel and a queue.

For example, the determining unit is jointly implemented by the scheduling control module, the pipe management module, the lossless optimization module, the lossy optimization module, and the link management module in FIG. 14, and the application unit may be integrated into the scheduling control module.

It should be noted that, when the scheduling policy determining apparatus provided in the foregoing embodiments determines a scheduling policy, division of the foregoing functional units is merely used as an example for description. During actual application, the foregoing functions may be allocated to different functional units for implementation based on a requirement. That is, an internal structure of the device is divided into different functional units, to implement all or some of the functions described above. In addition, the scheduling policy determining apparatus provided in the foregoing embodiments pertains to a same concept as the scheduling policy determining method embodiments. For a specific implementation process, refer to the method embodiments. Details are not described herein again.

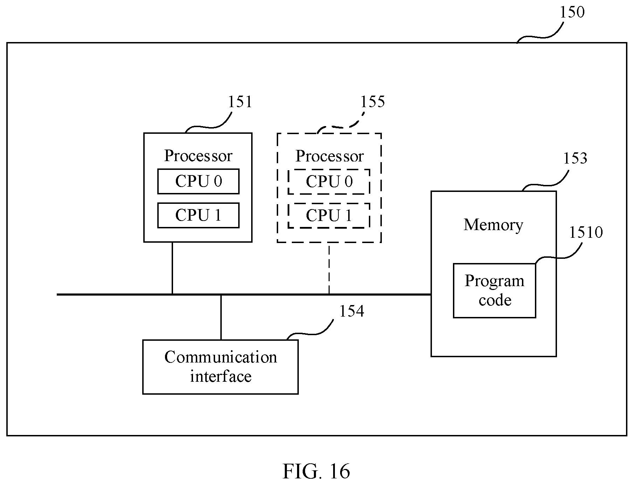

FIG. 16 is a diagram of a structure of a control device or network device 150 according to an embodiment of this application. The control device or network device 150 shown in FIG. 16 is configured to perform operations related to the scheduling policy determining method shown in any one of FIG. 3 to FIG. 14. The control device or network device 150 may be implemented by using a general bus architecture.

As shown in FIG. 16, the control device or network device 150 includes at least one processor 151, a memory 153, and at least one communication interface 154.

The processor 151 is, for example, a general-purpose central processing unit (central processing unit, CPU), a digital signal processor (digital signal processor, DSP), a network processor (network processor, NP), a data processing unit (Data Processing Unit, DPU), a microprocessor, or one or more integrated circuits configured to implement the solutions of this application. For example, the processor 151 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of this application. Alternatively, the processor may be a combination of processors implementing a computing function, for example, a combination of one or more microprocessors, or a combination of a DSP and a microprocessor.

Optionally, the control device or network device 150 further includes a bus. The bus is used to transfer information between components of the control device or network device 150. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one bold line is used to represent the bus in FIG. 16, but this does not mean that there is only one bus or only one type of bus.

The memory 153 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other compact disc storage, optical disk storage (including compact disc, laser disc, optical disc, digital versatile disc, Blu-ray disc, and the like), a magnetic disk storage medium or another magnetic storage device, or any other medium that can be used to carry or store expected program code in a form of an instruction or a data structure and that can be accessed by a computer, but is not limited thereto. For example, the memory 153 exists independently, and is connected to the processor 151 through the bus. The memory 153 may alternatively be integrated with the processor 151.

The communication interface 154 uses any apparatus such as a transceiver, and is configured to communicate with another device or a communication network. The communication network may be an Ethernet, a radio access network (RAN), a wireless local area network (wireless local area network, WLAN), or the like. The communication interface 154 may include a wired communication interface, and may further include a wireless communication interface. Specifically, the communication interface 154 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area networks, WLAN) interface, a cellular network communication interface, or a combination thereof. The Ethernet interface may be an optical interface, an electrical interface, or a combination thereof. In embodiments of this application, the communication interface 154 may be used by the control device or network device 150 to communicate with another device.

During specific implementation, in an embodiment, the processor 151 may include one or more CPUs, for example, a CPU 0 and a CPU 1 shown in FIG. 16. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the control device or network device 150 may include a plurality of processors, for example, a processor 151 and a processor 155 shown in FIG. 16. Each of the processors may be a single-core (single-CPU) processor or may be a multi-core (multi-CPU) processor. The processor herein may be one or more devices, circuits, and/or processing cores configured to process data (for example, computer program instructions).

During specific implementation, in an embodiment, the control device or network device 150 may further include an output device and an input device. The output device communicates with the processor 151, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 151, and may receive an input from a user in a plurality of manners. For example, the input device may be a mouse, a keyboard, a touchscreen device, a sensing device, or the like.

In some embodiments, the memory 153 is configured to store program code 1510 for executing the solutions of this application, and the processor 151 may execute the program code 1510 stored in the memory 153. In other words, the control device or network device 150 may execute, through the processor 151, the program code 1510 in the memory 153, to implement the data processing method provided in the method embodiments. The program code 1510 may include one or more software modules. Optionally, the processor 151 may also store program code or instructions for executing the solutions of this application.

In a specific embodiment, the control device or network device 150 in this embodiment of this application may correspond to the controller in the foregoing method embodiments. The processor 151 in the control device or network device 150 reads the instructions in the memory 153, so that the control device or network device 150 shown in FIG. 16 can perform all or some operations performed by the controller.

Specifically, the processor 151 is configured to: determine, in response to that a first link is congested, a first scheduling policy for traffic of at least one application on the first link according to scheduling policies separately supported by a plurality of applications to which traffic carried on the first link belongs; and apply the first scheduling policy.

For brevity, another optional implementation is not described herein again.

Steps of the scheduling policy determining method shown in any one of FIG. 3 to FIG. 14 are implemented by using an integrated logic circuit of hardware in the processor of the control device or network device 150, or by using instructions in a form of software. Steps of the methods disclosed with reference to embodiments of this application may be directly executed and accomplished by a hardware processor, or may be executed and accomplished by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

An embodiment of this application further provides a chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing scheduling policy determining methods.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor, any conventional processor, or the like. It should be noted that the processor may be a processor that supports an ARM architecture.

Further, in an optional embodiment, there are one or more processors and one or more memories. Optionally, the memory may be integrated with the processor, or the memory and the processor are separately disposed. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and serves as an external cache. By way of example, and not limitation, many forms of RAMs are available, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by a control device, the control device is enabled to perform the scheduling policy determining method provided above.

An embodiment of this application further provides a computer program product including instructions. When the computer program product runs on a control device, the control device is enabled to perform the scheduling policy determining method provided above.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

Unless otherwise defined, a technical term or a scientific term used herein should have a general meaning understood by a person of ordinary skill in the art of this application. In the specification and claims of this application, terms such as "first", "second", and "third" do not indicate any order, quantity, or importance, but are merely used to distinguish different components. Likewise, terms such as "a/an" and "one" do not indicate a quantity limitation, but means at least one. Terms such as "include" and "comprise" mean that an element or object before the "include" or "comprise" encompasses elements or objects and their equivalents listed after the "include" or "comprise", and other elements or objects are not excluded.

The foregoing descriptions are merely embodiments of this application, but are not intended to limit this application. Any modification, equivalent replacement, or improvement made within the spirit or principle of this application should fall within the protection scope of this application.

## Claims

1. A scheduling policy determining method, wherein the method comprises:
determining, in response to that a first link is congested, a first scheduling policy for traffic of at least one of a plurality of applications according to scheduling policies separately supported by the plurality of applications to which traffic carried on the first link belongs; and
applying the first scheduling policy.

2. The method according to claim 1, wherein the determining a first scheduling policy for traffic of at least one application on the first link according to scheduling policies separately supported by a plurality of applications to which traffic carried on the first link belongs comprises:
determining, in response to that an application supporting a lossless scheduling policy exists, the first scheduling policy according to a scheduling policy supported by the application supporting the lossless scheduling policy.

3. The method according to claim 2, wherein the determining the first scheduling policy according to a scheduling policy supported by the application supporting the lossless scheduling policy comprises:
determining, in response to that one application supports the lossless scheduling policy, that the first scheduling policy is the scheduling policy supported by the application supporting the lossless scheduling policy; or determining, in response to that a plurality of applications support the lossless scheduling policy, that the first scheduling policy comprises a scheduling policy supported by at least one of the applications supporting the lossless scheduling policy.

4. The method according to claim 3, wherein the determining that the first scheduling policy comprises a scheduling policy supported by at least one of the applications supporting the lossless scheduling policy comprises:
combining the application supporting the lossless scheduling policy and the scheduling policy supported by the application, to obtain at least one policy combination, wherein each policy combination corresponds to a scheduling policy for at least one application;
determining whether congestion on the first link can be resolved when scheduling is performed according to the scheduling policy corresponding to each of the at least one policy combination; and
selecting, in response to that a policy combination that can resolve the congestion on the first link exists, a policy combination from the policy combination that can resolve the congestion on the first link, wherein the first scheduling policy comprises a scheduling policy corresponding to the selected policy combination.

5. The method according to claim 4, wherein the determining whether congestion on the first link can be resolved when scheduling is performed according to the scheduling policy corresponding to each of the at least one policy combination comprises:
determining, based on predicted traffic data and according to a scheduling policy corresponding to a first policy combination, whether the scheduling policy corresponding to the first policy combination can resolve the congestion on the first link, wherein the first policy combination is any one of the at least one policy combination.

6. The method according to claim 5, wherein the determining, based on predicted traffic data and according to a scheduling policy corresponding to a first policy combination, whether the scheduling policy corresponding to the first policy combination can resolve the congestion on the first link comprises:
predicting traffic data of each application based on traffic profiles of the plurality of applications;
determining, according to the scheduling policy corresponding to the first policy combination and based on the predicted traffic data of each application, a value of traffic expected to be carried on the first link; and
determining, based on the value of traffic expected to be carried on the first link, whether the first link is congested.

7. The method according to any one of claims 4 to 6, wherein the selecting a policy combination from the policy combination that can resolve the congestion on the first link comprises:
selecting, based on at least one of a priority of the application and an application requirement, the policy combination from the policy combination that can resolve the congestion on the first link.

8. The method according to any one of claims 2 to 7, wherein the determining a first scheduling policy for traffic of at least one application on the first link according to scheduling policies separately supported by a plurality of applications to which traffic carried on the first link belongs further comprises:
determining, in response to that no application supporting the lossless scheduling policy exists, the first scheduling policy according to a scheduling policy supported by an application supporting a lossy scheduling policy.

9. The method according to any one of claims 1 to 8, wherein the method further comprises:
determining a link related to the first scheduling policy;
determining, based on traffic data of the link related to the first scheduling policy, whether the link related to the first scheduling policy is congested after the first scheduling policy is executed; and
generating, in response to that the link related to the first scheduling policy is not congested, a first scheduling policy instruction according to the first scheduling policy.

10. The method according to any one of claims 1 to 8, wherein the method further comprises:
determining, in response to that a second link is congested, a second scheduling policy for traffic of at least one application on the second link according to scheduling policies separately supported by a plurality of applications to which traffic carried on the second link belongs;
determining links related to the first scheduling policy and the second scheduling policy;
determining, based on traffic data of the related links, whether the related links are congested after the first scheduling policy and the second scheduling policy are executed; and
in response to that the related links are not congested, generating a first scheduling policy instruction according to the first scheduling policy and generating a second scheduling policy instruction according to the second scheduling policy.

11. The method according to any one of claims 1 to 10, wherein the method further comprises:
determining, before the first scheduling policy is applied, an expected benefit obtained by performing traffic scheduling according to the first scheduling policy;
determining an actual benefit after the first scheduling policy is applied; and
determining, in response to that a third link is congested, a third scheduling policy based on the expected benefit and the actual benefit.

12. The method according to any one of claims 1 to 11, wherein the method further comprises:
generating a traffic profile of each application based on traffic data of the plurality of applications; and
adjusting a mapping relationship between each application and a pipe based on the traffic profile of each application, wherein the pipe comprises at least one of a tunnel and a queue.

13. The method according to any one of claims 1 to 11, wherein the method further comprises:
obtaining a traffic profile of each group in each grouping manner that is obtained by grouping the plurality of applications in a plurality of grouping manners, wherein each group comprises at least one application; and
adjusting a mapping relationship between the plurality of applications and a pipe based on the traffic profile of each group, wherein the pipe comprises at least one of a tunnel and a queue.

14. A scheduling policy determining apparatus, wherein the apparatus comprises:
a determining unit, configured to determine, in response to that a first link is congested, a first scheduling policy for traffic of at least one application on the first link according to scheduling policies separately supported by a plurality of applications to which traffic carried on the first link belongs; and
an application unit, configured to apply the first scheduling policy.

15. The apparatus according to claim 14, wherein the determining unit is configured to:
determine, in response to that an application supporting a lossless scheduling policy exists, the first scheduling policy according to a scheduling policy supported by the application supporting the lossless scheduling policy.

16. The apparatus according to claim 15, the determining unit is configured to:
determine, in response to that one application supports the lossless scheduling policy, that the first scheduling policy is the scheduling policy supported by the application supporting the lossless scheduling policy; or determine, in response to that a plurality of applications support the lossless scheduling policy, that the first scheduling policy comprises a scheduling policy supported by at least one of the applications supporting the lossless scheduling policy.

17. The apparatus according to claim 16, wherein the determining unit is configured to:
combine the application supporting the lossless scheduling policy and the scheduling policy supported by the application, to obtain at least one policy combination, wherein each policy combination corresponds to a scheduling policy for at least one application;
determine whether congestion on the first link can be resolved when scheduling is performed according to the scheduling policy corresponding to each of the at least one policy combination; and
select, in response to that a policy combination that can resolve the congestion on the first link exists, a policy combination from the policy combination that can resolve the congestion on the first link, wherein the first scheduling policy comprises a scheduling policy corresponding to the selected policy combination.

18. The apparatus according to any one of claims 14 to 17, wherein the determining unit is configured to:
determine a link related to the first scheduling policy;
determine, based on traffic data of the link related to the first scheduling policy, whether the link related to the first scheduling policy is congested after the first scheduling policy is executed; and
generate, in response to that the link related to the first scheduling policy is not congested, a first scheduling policy instruction according to the first scheduling policy.

19. The apparatus according to any one of claims 14 to 17, wherein the determining unit is configured to:
determine, in response to that a second link is congested, a second scheduling policy for traffic of at least one application on the second link according to scheduling policies separately supported by a plurality of applications to which traffic carried on the second link belongs;
determine links related to the first scheduling policy and the second scheduling policy;
determine, based on traffic data of the related links, whether the related links are congested after the first scheduling policy and the second scheduling policy are executed; and
in response to that the related links are not congested, generate a first scheduling policy instruction according to the first scheduling policy and generate a second scheduling policy instruction according to the second scheduling policy.

20. The apparatus according to any one of claims 14 to 19, wherein the determining unit is configured to:
determine, before the first scheduling policy is applied, an expected benefit obtained by performing traffic scheduling according to the first scheduling policy;
determine an actual benefit after the first scheduling policy is applied; and
determine, in response to that a third link is congested, a third scheduling policy based on the expected benefit and the actual benefit.

21. The apparatus according to any one of claims 14 to 20, wherein the apparatus further comprises a generation unit and an adjustment unit, wherein
the generation unit is configured to generate a traffic profile of each application based on traffic data of the plurality of applications; and
the adjustment unit is configured to adjust a mapping relationship between each application and a pipe based on the traffic profile of each application, wherein the pipe comprises at least one of a tunnel and a queue.

22. The apparatus according to any one of claims 14 to 20, wherein the apparatus further comprises a generation unit and an adjustment unit, wherein
the generation unit is configured to obtain a traffic profile of each group in each grouping manner that is obtained by grouping the plurality of applications in a plurality of grouping manners, wherein each group comprises at least one application; and
the adjustment unit is configured to adjust a mapping relationship between the plurality of applications and a pipe based on the traffic profile of each group, wherein the pipe comprises at least one of a tunnel and a queue.

23. An electronic device, wherein the electronic device comprises a processor and a memory, the memory is configured to store a software program, and the processor runs or executes the software program stored in the memory, to enable the electronic device to implement the method according to any one of claims 1 to 13.

24. A computer-readable storage medium, wherein the computer-readable storage medium is configured to store program code executed by a processor, and the program code comprises instructions used to implement the method according to any one of claims 1 to 13.

25. A computer program product, comprising program code, wherein when a computer runs the computer program product, the computer is enabled to perform the method according to any one of claims 1 to 13.
